# EUROPÄISCHE PATENTANMELDUNG

(11) **EP 3 792 042 A1**
(43) Veröffentlichungstag der Anmeldung: **17.03.2021**
(21) Anmeldenummer: 20199527.1
(22) Anmeldetag: 29.06.2017
(51) Int. Cl.: B29C 64/153, B29C 64/205, B29C 64/227, B22F 3/105, B22F 10/10, B22F 10/00, B33Y 30/00

(54) **VORRICHTUNG ZUR ADDITIVEN HERSTELLUNG DREIDIMENSIONALER OBJEKTE**

(30) Priorität: 14.11.2016 DE 102016121802
(62) Teilanmeldung aus: 18195175.7
(71) Anmelder: CL Schutzrechtsverwaltungs GmbH, 96215 Lichtenfels (DE)
(72) Erfinder: Winiarski, Daniel, 96050 Bamberg (DE); Hofmann, Alexander, 96260 Weismain (DE); Stammberger, Jens, 96472 Rödental (DE)
(74) Vertreter: Hafner & Kohl PartmbB

(57) **Zusammenfassung**

Vorrichtung (1) zur additiven Herstellung dreidimensionaler Objekte (3) durch sukzessives schichtweises selektives Belichten und damit einhergehendes sukzessives schichtweises selektives Verfestigen von Baumaterialschichten aus einem vermittels eines Energiestrahls verfestigbaren Baumaterial (4), umfassend: eine Prozesskammer (14), welche eine Arbeitsebene (A) umfasst, welche einen ersten Arbeitsebenenbereich (A1), welcher eine Bauebene (E) umfasst, einen weiteren Arbeitsebenenbereich (A2), in welchem wenigstens ein Teil einer Beschichtereinrichtung (6) angeordnet ist, und eine Abschirmeinrichtung (18).

## Beschreibung

Die Erfindung betrifft eine Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial.

Derartige Vorrichtungen zur additiven Herstellung dreidimensionaler Objekte sind an und für sich bekannt. Vermittels entsprechenden Vorrichtungen werden herzustellende dreidimensionale Objekte durch sukzessives schichtweises selektives Belichten und damit einhergehendes sukzessives schichtweises selektives Verfestigen von Baumaterialschichten in den dem schichtbezogenen Querschnitt des herzustellenden Objekts entsprechenden Bereichen aus einem vermittels eines Energiestrahls verfestigbaren Baumaterial additiv aufgebaut.

Es ist bekannt, dass, insbesondere bewegbar gelagerte, Funktionskomponenten entsprechender Vorrichtungen durch, insbesondere staubförmiges, Baumaterial und/oder prozessbedingt entstehende Verunreinigungen, wie z. B. Rauch- und/oder Schmauchpartikel, verschmutzt werden können, was sich negativ auf deren Betrieb auswirken kann.

Die bisher bekannten Maßnahmen zur Abschirmung entsprechender Funktionskomponenten gegenüber dem Eindringen von Baumaterial und/oder prozessbedingt entstehenden Verunreinigungen bedürfen der steten Weiterentwicklung.

Der Erfindung liegt damit die Aufgabe zugrunde, eine, insbesondere im Hinblick auf eine zuverlässige Maßnahme zur Abschirmung entsprechender Funktionskomponenten gegenüber dem Eindringen von Baumaterial und/oder prozessbedingt entstehenden Verunreinigungen, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen in eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtereinrichtung und eine Belichtereinrichtung. Die Beschichtereinrichtung ist zur Ausbildung selektiv zu belichtender bzw. selektiv zu verfestigender Baumaterialschichten in einer Bauebene bzw. einem Baufeld der Vorrichtung, in welcher bzw. in welchem die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, eingerichtet. Die Belichtereinrichtung ist zur selektiven Belichtung selektiv zu verfestigender Baumaterialschichten in der Bauebene der Vorrichtung eingerichtet.

Die Beschichtereinrichtung umfasst eine Beschichterelementbaugruppe, welche wenigstens ein Beschichterelement umfasst. Die Beschichterelementbaugruppe ist über eine Führungseinrichtung, insbesondere relativ zu der Bauebene, bewegbar gelagert. Die Führungseinrichtung ist entsprechend eingerichtet, die Beschichterelementbaugruppe entlang einer definierten, insbesondere linearen Bewegungsbahn, insbesondere relativ zu der Bauebene, zu führen. Konkret kann die Beschichterelementbaugruppe ein erstes Beschichterelement in Form eines eine Beschichterklinge bildenden Beschichterklingenelements und ein zweites Beschichterelement in Form eines das Beschichterklingenelement tragenden Beschichterarms umfassen. Der Beschichterarm ist typischerweise das Beschichterelement der Beschichterelementbaugruppe, über welches die Beschichterelementbaugruppe mit der Führungseinrichtung gekoppelt ist.

Die Führungseinrichtung kann ein oder mehrere, insbesondere schienenartige bzw. -förmige, Führungselemente umfassen, welche zu einer, insbesondere linear, bewegbar gelagerten Führung der Beschichterelementbaugruppe entlang einer durch die Führungselemente definierten, insbesondere linearen, Bewegungsachse eingerichtet sind. Die Führungseinrichtung kann ferner eine, insbesondere (elektro)motorische, Antriebseinrichtung umfassen, welche zur Erzeugung einer eine, insbesondere lineare, Bewegung der Beschichterelementbaugruppe entlang der Bewegungsachse erzeugenden Antriebskraft eingerichtet ist.

Die Belichtereinrichtung kann eine Strahlerzeugungseinrichtung, welche zur Erzeugung eines Energie- bzw. Laserstrahls eingerichtet ist, gegebenenfalls eine Strahlablenkeinrichtung (Scannereinrichtung), welche zur Ablenkung eines von der Strahlerzeugungseinrichtung erzeugten Energie- bzw. Laserstrahls auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc., umfassen.

Die Vorrichtung umfasst eine Prozesskammer, welche eine Arbeitsebene umfasst. Die Arbeitsebene umfasst einen ersten Arbeitsebenenbereich und einen weiteren (bzw. zweiten) Arbeitsebenenbereich. Der erste Arbeitsebenenbereich und der weitere Arbeitsebenenbereich können unterschiedliche Teilbereiche einer (einzigen) Arbeitsplatte bilden oder durch mehrere, gegebenenfalls beabstandet angeordnete, Arbeitsplatten, d. h. jeweils durch wenigstens eine eigene Arbeitsplatte, gebildet sein.

Der erste Arbeitsebenenbereich dient der eigentlichen additiven Herstellung dreidimensionaler Objekte. Der erste Arbeitsebenenbereich umfasst sonach die Bauebene, d. h. das eigentliche Baufeld, gegebenenfalls einen Dosierbereich, in welchem vermittels der Beschichtereinrichtung über die Bauebene unter Ausbildung selektiv zu belichtender bzw. selektiv zu verfestigender Baumaterialschichten zu verteilendes Baumaterial, z. B. aus einem Dosiermodul, dosiert wird, sowie gegebenenfalls einen Überlaufbereich, in welchem überschüssiges Baumaterial, z. B. in einem Überlaufmodul, gesammelt wird. In dem ersten Arbeitsebenenbereich erfolgt sonach die eigentliche additive Herstellung dreidimensionaler Objekte, mithin befindet sich im Betrieb der Vorrichtung in dem ersten Arbeitsebenenbereich jedenfalls Baumaterial.

Der weitere Arbeitsebenenbereich dient der Anordnung wenigstens eines Teils der Beschichtereinrichtung. In dem weiteren Arbeitsebenenbereich ist sonach wenigstens ein Teil der Beschichtereinrichtung angeordnet. Selbstverständlich können in dem weiteren Arbeitsebenenbereich weitere Funktionskomponenten der Vorrichtung bzw. Teile weiterer Funktionskomponenten der Vorrichtung angeordnet sein. In dem weiteren Arbeitsebenenbereich erfolgt sonach nicht die eigentliche additive Herstellung dreidimensionaler Objekte, mithin befindet sich in dem weiteren Arbeitsebenenbereich typischerweise kein Baumaterial, vielmehr befinden sich in dem weiteren Arbeitsebenenbereich insbesondere diejenigen Komponenten der Beschichtereinrichtung, welche durch, insbesondere staubförmiges, Baumaterial und/oder prozessbedingt entstehende Verunreinigungen, wie z. B. Rauch- und/oder Schmauchpartikel, verschmutzt werden können.

Die Vorrichtung umfasst weiterhin eine Abschirmeinrichtung, welche zur Abschirmung des zweiten Arbeitsebenenbereichs vor dem Eindringen von Baumaterial und/oder von prozessbedingt entstehenden Verunreinigungen in den weiteren Arbeitsebenenbereich eingerichtet ist. Die Abschirmeinrichtung umfasst wenigstens ein entlang von Lagerpunkten, d. h. z. B. Gleit- oder Rollenlagern, bewegbar geführtes Abschirmband. Bei dem Abschirmband handelt es sich im Allgemeinen um ein band- oder riemenartiges, mithin längliches, Element, welches aufgrund seiner Abmessungen eine Abschirmwirkung aufweist, d. h. zur Abschirmung des weiteren Arbeitsebenenbereichs vor dem Eindringen von Baumaterial und/oder von prozessbedingt entstehenden Verunreinigungen in den weiteren Arbeitsebenenbereich eingerichtet ist. Das Abschirmband erstreckt sich in Längsrichtung typischerweise entlang des ersten Arbeitsebenenbereichs, insbesondere wenigstens entlang der Bauebene bzw. des die Bauebene umfassenden Abschnitts des ersten Arbeitsebenenbereichs.

Das entlang entsprechender Lagerpunkte gelagerte, d. h. insbesondere über entsprechende Lagerpunkte gespannte, Abschirmband definiert einen Innenraum, innerhalb welches wenigstens die die Beschichterelementbaugruppe führende Führungseinrichtung angeordnet oder ausgebildet ist. Die Führungseinrichtung ist derart gegenüber dem Eindringen von Baumaterial und/oder von prozessbedingt entstehenden Verunreinigungen abgeschirmt bzw. vor Verschmutzungen durch, insbesondere staubförmiges, Baumaterial und/oder prozessbedingt entstehende Verunreinigungen, wie z. B. Rauch- und/oder Schmauchpartikel, geschützt.

Das, wie erwähnt, entlang von Lagerpunkten bewegbar geführte Abschirmband ist mit der ebenso bewegbar gelagerten Beschichterelementbaugruppe bewegungsgekoppelt. Mithin werden Bewegungen der Beschichterelementbaugruppe (unmittelbar) auf das Abschirmband übertragen. Die Beschichterelementbaugruppe, im Allgemeinen die Beschichtereinrichtung stellt damit den Antrieb für Bewegungen des Abschirmbands dar. Es ist nicht notwendig, einen gesonderten Antrieb zur Realisierung von Bewegungen des Abschirmbands vorzusehen.

Die geometrische Gestalt des durch das Abschirmband definierten Innenraums ist (im Wesentlichen) durch die Anordnung der Lagerpunkte, entlang welcher das Abschirmband geführt ist, bestimmt. Das Abschirmband kann z. B. über wenigstens vier Lagerpunkte in einer vier- bzw. rechteckigen Anordnung bewegbar geführt sein. Die Lagerpunkte können z. B. an den (gedachten) Eckpunkten des die vier- bzw. rechteckige Anordnung bildenden Vier- bzw. Rechtecks angeordnet oder ausgebildet sein, sodass sich ein (im Wesentlichen) vier- bzw. rechteckiger Innenraum ergibt.

Durch die beschriebene Ausbildung und Anordnung der Abschirmeinrichtung ist eine zuverlässige Maßnahme zur Abschirmung bzw. Abdichtung potentiell verschmutzender Funktionskomponenten der Vorrichtung, d. h. insbesondere der Beschichtereinrichtung, gegenüber dem Eindringen von Baumaterial und/oder prozessbedingt entstehenden Verunreinigungen, und somit eine verbesserte Vorrichtung zur additiven Herstellung dreidimensionaler Objekte gegeben.

Die Abschirmeinrichtung kann wenigstens ein sich zumindest abschnittsweise entlang des Außenumfangs des Abschirmbands erstreckendes äußeres Abschirmelement umfassen. Ein entsprechendes äußeres Abschirmelement kann diesen abschnittsweise kontaktierend an dem Außenumfang des Abschirmbands anliegen, sodass sich bei einer Bewegung des Abschirmbands relativ zu dem äußeren Abschirmelement eine Abstreifwirkung des äußeren Abschirmelements ergibt. Ein entsprechendes äußeres Abschirmelement ist sonach mit zwei Funktionalitäten, nämlich einerseits einer Abschirm- bzw. Abdichtfunktionalität und andererseits einer Abstreif- bzw. Reinigungsfunktionalität, welche ein Abstreifen von etwaig auf dem Abschirmband befindlichem Baumaterial und somit ein Reinigen des Abschirmbands bewirkt, versehen. Ein entsprechendes äußeres Abschirmelement ist typischerweise in dem ersten Arbeitsebenenbereich angeordnet oder ausgebildet.

Ein jeweiliges äußeres Abschirmelement kann wenigstens in einem den Außenumfang des Abschirmbands kontaktierenden Bereich einen Abstreifabschnitt aus einem elastischen Material, insbesondere einem Elastomer-, Filz- oder Schaumstoffmaterial, beispielsweise Moosgummi, umfassen. Ein jeweiliges äußeres Abschirmelement kann kraftbeaufschlagt, insbesondere federkraftbeaufschlagt, gegen den Außenumfang des Abschirmbands bewegt sein, sodass auch bei einem sich aufgrund der Abstreifwirkung ergebenden Materialabtrag von dem Abstreifabschnitt stets eine kontaktierende Anlage an dem Außenumfang des Abschirmbands gewährleistet ist.

Die Abschirmeinrichtung kann wenigstens zwei äußere Abschirmelemente in einander gegenüber liegenden Anordnung umfassen. Die äußeren Abschirmelemente können jeweils in einem Umlenkbereich, in welchem das Abschirmband über einen Lagerpunkt von einer ersten Erstreckungsrichtung in eine (recht)winklig dazu verlaufende zweite Erstreckungsrichtung umgelenkt wird, angeordnet oder ausgebildet sein. Jeweilige äußere Abschirmelemente können an einer (seitlichen) Prozesskammerbegrenzung, insbesondere einer (seitlichen) Prozesskammerwandung, angeordnet oder ausgebildet sein.

Die Abschirmeinrichtung kann ferner wenigstens ein sich zumindest abschnittsweise entlang des Innenumfangs des Abschirmbands erstreckendes inneres Abschirmelement umfassen. Ein entsprechendes inneres Abschirmelement kann diesen abschnittsweise kontaktierend an dem Innenumfang des Abschirmbands anliegen, sodass sich bei einer Bewegung des Abschirmbands relativ zu dem inneren Abschirmelement eine Abstreifwirkung des inneren Abschirmelements ergibt. Auch ein entsprechendes inneres Abschirmelement ist sonach mit zwei Funktionalitäten, nämlich einerseits einer Abschirm- bzw. Abdichtfunktionalität und andererseits einer Abstreif- bzw. Reinigungsfunktionalität, welche ein Abstreifen von etwaig auf dem Abschirmband befindlichem Baumaterial und somit ein Reinigen des Abschirmbands bewirkt, versehen. Ein entsprechendes inneres Abschirmelement ist typischerweise in dem zweiten Arbeitsebenenbereich angeordnet oder ausgebildet.

Ein entsprechendes inneres Abstreifelement kann sich zwischen zwei Lagerpunkten, entlang welcher sich das Abschirmband erstreckt, entlang des Innenumfangs des Abschirmbands erstrecken.

Ein jeweiliges inneres Abschirmelement kann als ein mehrere Abstreifborsten umfassendes Bürstenelement ausgebildet sein oder wenigstens ein solches umfassen. Entsprechende Bürstenelemente können an einer dem jeweiligen inneren Abschirmelement zugehörigen Tragstruktur, insbesondere winklig geneigt relativ zu dem Abschirmband, angeordnet oder ausgebildet sein.

Die Abschirmeinrichtung kann wenigstens zwei innere Abschirmelemente umfassen. Dabei kann ein erstes bzw. oberes Abschirmelement diesen abschnittsweise kontaktierend an einem oberen Randbereich des Innenumfangs des Abschirmbands anliegen, und ein zweites bzw. unteres Abschirmelement diesen abschnittsweise kontaktierend an einem unteren Randbereich des Innenumfangs des Abschirmbands anliegen. Durch eine derartige Anordnung ist die beschriebene Abschirm- bzw. Abdichtfunktionalität verbessert.

Um eine zuverlässige Abschirm- bzw. Abdichtwirkung zu realisieren, kann ein einem freien Ende eines zweiten äußeren Abschirmelements zugewandtes freies Ende eines ersten äußeren Abschirmelements im Bereich eines diesem zugewandten ersten freien Endes des inneren Abschirmelements angeordnet sein. Ein einem freien Ende des ersten äußeren Abschirmelements zugewandtes freies Ende eines zweiten äußeren Abschirmelements kann im Bereich eines diesem zugewandten zweiten freien Endes des inneren Abschirmelements angeordnet sein. Die jeweiligen äußeren und inneren Abschirmelemente sind sonach, insbesondere bezüglich der Längserstreckung des Abschirmbands, wenngleich parallel zueinander versetzt angeordnet, nacheinander geschaltet angeordnet. Um die Abschirm- bzw. Abdichtwirkung zu verbessern, ist prinzipiell auch ein gewisser Überlapp äußerer und innerer Abschirmelemente denkbar.

Um in dem Bereich, in dem ein einem freien Ende eines zweiten äußeren Abschirmelements zugewandtes freies Ende eines ersten äußeren Abschirmelements im Bereich eines diesem zugewandten ersten freien Endes des inneren Abschirmelements angeordnet ist, eine zusätzlich Abschirmwirkung gegenüber dem Eindringen von Baumaterial bzw. entsprechenden Verschmutzungen zu realisieren, kann in diesem Bereich eine Einblaseinrichtung zum An- oder Einblasen von, insbesondere inertem, Gas angeordnet oder ausgebildet sein. Die Einblaseinrichtung umfasst wenigstens ein, insbesondere düsenartiges, Einblaseelement. Sofern die Einblaseinrichtung mehrere Einblaselemente umfasst, sind diese typischerweise ober- und unterhalb des oberen und unteren Randbereichs des Abschirmbands angeordnet oder ausgebildet.

Analoges gilt für den Bereich, in dem ein einem freien Ende des ersten äußeren Abschirmelements zugewandtes freies Ende des zweiten äußeren Abschirmelements im Bereich eines diesem zugewandten zweiten freien Endes des inneren Abschirmelements angeordnet ist. Mithin kann auch in diesem Bereich eine wenigstens ein, insbesondere düsenartiges, Einblaseelement umfassende Einblaseinrichtung zum An- oder Einblasen von, insbesondere inertem, Gas angeordnet oder ausgebildet sein. Sofern die Einblaseinrichtung mehrere Einblaselemente umfasst, sind diese typischerweise ober- und unterhalb des oberen und unteren Randbereichs des Abschirmbands angeordnet oder ausgebildet.

Zur Realisierung der beschriebenen Bewegungskopplung zwischen der Beschichterelementbaugruppe und dem Abschirmband kann das Abschirmband wenigstens eine Ausnehmung, Durchbrechung, Öffnung, etc. aufweisen, welche von der Beschichterelementbaugruppe, insbesondere von dem dieser zugehörigen Beschichterarm, quer zu ihrer Längserstreckung durchgriffen ist. Die Bewegungskopplung zwischen dem Abschirmband und der Beschichterelementbaugruppe ist hier insbesondere durch den Durchgriff der Beschichterelementbaugruppe durch die Ausnehmung in dem Abschirmband gebildet. Die Ausnehmung ist typischerweise unter Berücksichtigung der Querschnittsgeometrie der Beschichterelementbaugruppe, insbesondere des Beschichterarms, bemessen, d. h. insbesondere passgenau im Hinblick auf die Querschnittsgeometrie der Beschichterelementbaugruppe, insbesondere des Beschichterarms, gewählt, sodass ein Durchtritt von Baumaterial durch die Ausnehmung nicht möglich ist. Gegebenenfalls können in diesem Bereich zusätzliche Dichtelemente vorgesehen werden. Das Abschirmband ist in dieser Ausführungsform abgesehen von der Ausnehmung geschlossen ausgeführt.

In einer Ausführungsform, in der das Abschirmband nicht geschlossen ausgeführt ist, d. h. zwei freie Enden aufweist, kann zur Realisierung der beschriebenen Bewegungskopplung zwischen der Beschichterelementbaugruppe und dem Abschirmband ein erstes freies Ende des Abschirmbands über einen ersten Befestigungspunkt form- und/oder kraft- und/oder stoffschlüssig an der Beschichterelementbaugruppe, insbesondere an einem Beschichterarm, befestigt sein und ein zweites freies Ende des Abschirmbands über einen zweiten Befestigungspunkt an der Beschichterelementbaugruppe, insbesondere an dem Beschichterarm, befestigt sein. Die Bewegungskopplung zwischen dem Abschirmband und der Beschichterelementbaugruppe ist durch die Befestigung der freien Enden des Abschirmbands an der Beschichterelementbaugruppe, insbesondere dem Beschichterarm, gebildet.

Die Führungseinrichtung, d. h. insbesondere entsprechende dieser zugehörige Führungselemente, kann bzw. können, insbesondere hängend, oberhalb der Arbeitsebene angeordnet oder ausgebildet sein. Die Führungseinrichtung kann hierfür z. B. an einer Prozesskammerbegrenzung, insbesondere an einer die Prozesskammer seitlich oder deckenseitig begrenzenden Prozesskammerwandung, angeordnet oder ausgebildet sein. Durch eine entsprechend in vertikaler Richtung zu der Arbeitsebene beabstandete Anordnung der Führungseinrichtung ist ein weiterer Schutz der Führungseinrichtung vor Verschmutzungen gegeben.

Die Erfindung ist anhand von Ausführungsbeispielen in den Zeichnungsfiguren näher erläutert. Dabei zeigen:
- Fig. 1: eine Prinzipdarstellung eine Vorrichtung gemäß einem Ausführungsbeispiel;
- Fig. 2, 3: je einen Ausschnitt der in Fig. 1 gezeigten Vorrichtung.

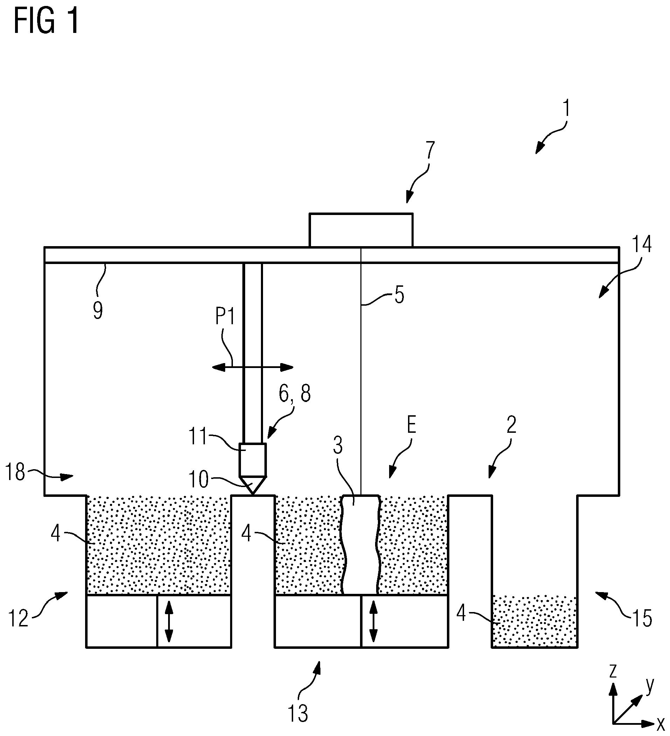

Fig. 1 zeigt eine Prinzipdarstellung einer Vorrichtung 1 gemäß einem Ausführungsbeispiel der Vorrichtung 1. Dabei ist in Fig. 1 nur der für die Erläuterung des nachfolgend beschriebenen Prinzips relevante Ausschnitt der Vorrichtung 1 gezeigt.

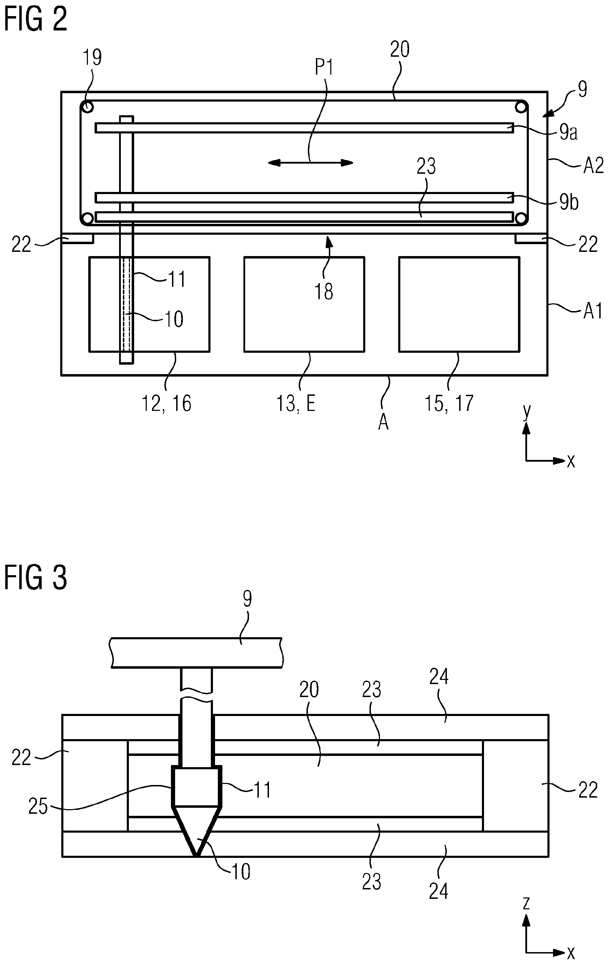

Fig. 2 zeigt einen Ausschnitt der in Fig. 1 gezeigten Vorrichtung 1 in einer Aufsicht auf die Arbeitsebene 2 der Vorrichtung 1 (Blickrichtung z-Achse). Fig. 3 zeigt eine Seitenansicht (Blickrichtung y-Achse) auf einen Teil der der Vorrichtung 1 zugehörigen Abschirmeinrichtung 3.

Die Vorrichtung 1 dient der additiven Herstellung dreidimensionaler Objekte 3, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 5, d. h. z. B. eines Metallpulvers, vermittels eines Energie- bzw. Laserstrahls 5. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 3 und können beispielsweise "geslicte" CAD-Daten des herzustellenden Objekts 3 beinhalten. Die Vorrichtung 1 kann als Laser-CUSING®-Vorrichtung, d. h. als Vorrichtung zur Durchführung selektiver Laserschmelzverfahren, ausgebildet sein.

Die Vorrichtung 1 umfasst die zur Durchführung additiver Bauvorgänge erforderlichen Funktionskomponenten; in Fig. 1 ist beispielsweise eine Beschichtereinrichtung 6 und eine Belichtereinrichtung 7 gezeigt. Die Beschichtereinrichtung 6 ist zur Ausbildung selektiv zu belichtender bzw. selektiv zu verfestigender Baumaterialschichten in einer Bauebene E bzw. einem Baufeld der Vorrichtung 1 eingerichtet. Die Belichtereinrichtung 7 ist zur selektiven Belichtung selektiv zu verfestigender Baumaterialschichten in der Bauebene E der Vorrichtung 1 eingerichtet und umfasst hierfür eine Strahlerzeugungseinrichtung (nicht gezeigt), welche zur Erzeugung eines Energie- bzw. Laserstrahls eingerichtet ist, gegebenenfalls eine Strahlablenkeinrichtung (nicht gezeigt), welche zur Ablenkung eines von der Strahlerzeugungseinrichtung erzeugten Energie- bzw. Laserstrahls auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc.

Die Beschichtereinrichtung 6 umfasst eine mehrere Beschichterelemente umfassende Beschichterelementbaugruppe 8. Die Beschichterelementbaugruppe 8 ist über eine in Fig. 1 lediglich angedeutete Führungseinrichtung 9 in, wie durch den Doppelpfeil P1 angedeutet, horizontaler Richtung bewegbar gelagert. Die Führungseinrichtung 9 ist entsprechend eingerichtet, die Beschichterelementbaugruppe 8 entlang einer definierten linearen Bewegungsbahn zu führen.

Wie sich insbesondere auch aus Fig. 2 ergibt, umfasst die Beschichterelementbaugruppe 8 ein erstes Beschichterelement in Form eines eine Beschichterklinge bildenden Beschichterklingenelements 10 und ein zweites Beschichterelement in Form eines das Beschichterklingenelement 10 tragenden Beschichterarms 11. Fig. 2 zeigt, dass der Beschichterarm 11 das Beschichterelement der Beschichterelementbaugruppe 8 ist, über welches diese mit der Führungseinrichtung 9 gekoppelt ist.

In Fig. 1 ist ferner ein Dosiermodul 12, ein Baumodul 13 und ein Überlaufmodul 15 dargestellt, welche an einen unteren Bereich einer intertisierbaren Prozesskammer 14 der Vorrichtung 1 angedockt sind. Die genannten Module können auch einen unteren Bereich der Prozesskammer 14 der Vorrichtung 1 bilden.

Anhand von Fig. 2 ist ersichtlich, dass die Führungseinrichtung 9 mehrere, insbesondere schienenartige bzw. -förmige, Führungselemente 9a, 9b umfasst, welche zu der beschriebenen Führung der Beschichterelementbaugruppe 8 entlang der durch die Führungselemente 9a, 9b definierten linearen Bewegungsachse eingerichtet sind. Die Führungseinrichtung 9 umfasst ferner eine, insbesondere (elektro)motorische, Antriebseinrichtung (nicht gezeigt), welche zur Erzeugung einer eine Bewegung der Beschichterelementbaugruppe 8 entlang der Bewegungsachse erzeugenden Antriebskraft eingerichtet ist.

Die bereits genannte Prozesskammer 14 der Vorrichtung 1 umfasst eine Arbeitsebene A. Die Arbeitsebene A umfasst einen ersten Arbeitsebenenbereich A1 und einen zweiten Arbeitsebenenbereich A2.

Anhand von Fig. 2 ist ersichtlich, dass der erste Arbeitsebenenbereich A1 der eigentlichen additiven Herstellung dreidimensionaler Objekte 4 dient. Der erste Arbeitsebenenbereich A1 umfasst die Bauebene E, d. h. das eigentliche Baufeld, einen durch das Dosiermodul 12 definierten Dosierbereich D, in welchem vermittels der Beschichtereinrichtung 6 über die Bauebene E unter Ausbildung selektiv zu belichtender bzw. selektiv zu verfestigender Baumaterialschichten zu verteilendes Baumaterial 5 aus dem Dosiermodul 12 dosiert wird, sowie einen Überlaufbereich 17, in welchem überschüssiges Baumaterial 4 in dem Überlaufmodul 15 gesammelt wird. In dem ersten Arbeitsebenenbereich A1 erfolgt sonach die eigentliche additive Herstellung dreidimensionaler Objekte 4.

Der zweite Arbeitsebenenbereich A2 dient der Anordnung wenigstens eines Teils der Beschichtereinrichtung 6. In dem weiteren Arbeitsebenenbereich A2 ist sonach wenigstens ein Teil der Beschichtereinrichtung 6 angeordnet. In dem zweiten Arbeitsebenenbereich A2 erfolgt sonach nicht die eigentliche additive Herstellung dreidimensionaler Objekte 3, mithin befindet sich in dem weiteren Arbeitsebenenbereich A2 typischerweise kein Baumaterial 4, vielmehr befinden sich in dem zweiten Arbeitsebenenbereich A2 insbesondere diejenigen Komponenten der Beschichtereinrichtung 6 bzw. der Führungseinrichtung 9, welche durch, insbesondere staubförmiges, Baumaterial und/oder prozessbedingt entstehende Verunreinigungen, wie z. B. Rauch- und/oder Schmauchpartikel, verschmutzt werden können.

Zur Abschirmung des zweiten Arbeitsebenenbereichs A2 vor dem Eindringen von Baumaterial 4 und/oder von prozessbedingt entstehenden Verunreinigungen in den zweiten Arbeitsebenenbereich A2 umfasst die Vorrichtung 1 eine Abschirmeinrichtung 18. Die Abschirmeinrichtung 18 umfasst ein entlang von Lagerpunkten 19, d. h. z. B. Gleit- oder Rollenlagern, bewegbar geführtes längliches Abschirmband 20. Das geschlossen ausgeführte Abschirmband 20 erstreckt sich in Längsrichtung abschnittsweise entlang des ersten Arbeitsebenenbereichs A1.

Das Abschirmband 20 definiert einen Innenraum 21, innerhalb welches die Führungseinrichtung 9 angeordnet ist. Die Führungseinrichtung 9 ist derart gegenüber dem Eindringen von Baumaterial 4 und/oder von prozessbedingt entstehenden Verunreinigungen abgeschirmt bzw. vor Verschmutzungen durch Baumaterial 4 und/oder prozessbedingt entstehende Verunreinigungen geschützt. In dem gezeigten Ausführungsbeispiel ist das Abschirmband 20 über vier Lagerpunkte 19 in einer vier- bzw. rechteckigen Anordnung bewegbar geführt. Die Lagerpunkte 19 sind an den (gedachten) Eckpunkten des die vier- bzw. rechteckige Anordnung bildenden Vier- bzw. Rechtecks angeordnet, sodass sich ein (im Wesentlichen) vier- bzw. rechteckiger Innenraum 21 ergibt.

Das Abschirmband 20 ist mit der bewegbar gelagerten Beschichterelementbaugruppe 8 bewegungsgekoppelt. Mithin werden Bewegungen der Beschichterelementbaugruppe 8 (unmittelbar) auf das Abschirmband 20 übertragen. Die Beschichterelementbaugruppe 8 stellt damit den Antrieb für Bewegungen des Abschirmbands 20 dar.

Die Abschirmeinrichtung 18 umfasst zwei sich jeweils abschnittsweise entlang des Außenumfangs des Abschirmbands 20 erstreckende äußere Abschirmelemente 22 umfassen. Die äußeren Abschirmelemente 22 sind in dem ersten Arbeitsebenenbereich A1 angeordnet. Konkreter sind die äußeren Abschirmelemente 22 jeweils in einem Umlenkbereich, in welchem das Abschirmband 20 über einen Lagerpunkt 19 von einer ersten Erstreckungsrichtung in eine (recht)winklig dazu verlaufende zweite Erstreckungsrichtung umgelenkt wird, angeordnet und liegen einander sonach gegenüber. Die äußeren Abschirmelemente 222 können an einer (seitlichen) Prozesskammerbegrenzung (nicht gezeigt), insbesondere einer (seitlichen) Prozesskammerwandung, angeordnet sein.

Die äußeren Abschirmelemente 22 liegen diesen abschnittsweise kontaktierend an dem Außenumfang des Abschirmbands 20 an, sodass sich bei einer Bewegung des Abschirmbands 20 relativ zu den äußeren Abschirmelementen 22 eine Abstreifwirkung der äußeren Abschirmelemente 22 ergibt. Die äußeren Abschirmelemente 22 sind sonach mit zwei Funktionalitäten, nämlich einerseits einer Abschirm- bzw. Abdichtfunktionalität und andererseits einer Abstreif- bzw. Reinigungsfunktionalität, welche ein Abstreifen von etwaig auf dem Abschirmband 20 befindlichem Baumaterial 4 und somit ein Reinigen des Abschirmbands 20 bewirkt, versehen.

Die äußeren Abschirmelemente 22 umfassen in einem den Außenumfang des Abschirmbands 20 kontaktierenden Bereich jeweils einen Abstreifabschnitt (nicht näher bezeichnet) aus einem elastischen Material, insbesondere einem Elastomer-, Filz- oder Schaumstoffmaterial, beispielsweise Moosgummi, und sind kraftbeaufschlagt, insbesondere federkraftbeaufschlagt, gegen den Außenumfang des Abschirmbands 20 bewegt, sodass auch bei einem sich aufgrund der Abstreifwirkung ergebenden Materialabtrag stets eine kontaktierende Anlage an dem Außenumfang des Abschirmbands 20 gewährleistet ist.

Die Abschirmeinrichtung 18 umfasst ferner zwei sich abschnittsweise, d. h. zwischen zwei (bezüglich des ersten Arbeitsebenenbereichs A1 vorderen) Lagerpunkten 19, entlang des Innenumfangs des Abschirmbands 20 erstreckende innere Abschirmelemente 23. Die inneren Abschirmelemente 23 sind in dem zweiten Arbeitsebenenbereich A2 angeordnet. Ein erstes bzw. oberes Abschirmelement 23 liegt diesen abschnittsweise kontaktierend an einem oberen Randbereich des Innenumfangs des Abschirmbands 20 an, ein zweites bzw. unteres Abschirmelement 23 liegt diesen abschnittsweise kontaktierend an einem unteren Randbereich des Innenumfangs des Abschirmbands 20 an.

Die inneren Abschirmelemente 23 liegen diesen abschnittsweise kontaktierend an dem Innenumfang des Abschirmbands 20 an, sodass sich bei einer Bewegung des Abschirmbands 20 relativ zu den inneren Abschirmelementen 23 eine Abstreifwirkung der inneren Abschirmelemente 23 ergibt. Auch die inneren Abschirmelemente 23 sind sonach mit zwei Funktionalitäten, nämlich einerseits einer Abschirm- bzw. Abdichtfunktionalität und andererseits einer Abstreif- bzw. Reinigungsfunktionalität, welche ein Abstreifen von etwaig auf dem Abschirmband 20 befindlichem Baumaterial 4 und somit ein Reinigen des Abschirmbands 20 bewirkt, versehen.

Die inneren Abschirmelemente 23 sind jeweils als ein mehrere Abstreifborsten (nicht gezeigt) umfassendes Bürstenelement ausgebildet. Die Bürstenelemente sind an einer dem jeweiligen inneren Abschirmelement 23 zugehörigen Tragstruktur 24, insbesondere winklig geneigt relativ zu dem Abschirmband 20, angeordnet.

Anhand von Fig. 2 ist ersichtlich, dass ein einem freien Ende des rechten äußeren Abschirmelements 22 zugewandtes freies Ende des linken äußeren Abschirmelements 22 im Bereich des diesem zugewandten linken freien Endes des inneren Abschirmelements 22 angeordnet ist. Ein einem freien Ende des linken äußeren Abschirmelements 22 zugewandtes freies Ende des rechten äußeren Abschirmelements 22 ist im Bereich des diesem zugewandten rechten freien Endes des inneren Abschirmelements 23 angeordnet. Die jeweiligen äußeren und inneren Abschirmelemente 22, 23 sind sonach, insbesondere bezüglich der Längserstreckung des Abschirmbands 20, wenngleich (in y-Richtung) parallel zueinander versetzt angeordnet, (in x-Richtung) nacheinander geschaltet angeordnet. Um die Abschirm- bzw. Abdichtwirkung zu verbessern, ist prinzipiell auch ein gewisser Überlapp äußerer und innerer Abschirmelemente 22, 23 denkbar.

Um in dem Bereich, in dem ein einem freien Ende des rechten äußeren Abschirmelements 22 zugewandtes freies Ende des linken äußeren 22 Abschirmelements 22 im Bereich eines diesem zugewandten linken freien Endes des inneren Abschirmelements 23 angeordnet ist, eine zusätzlich Abschirmwirkung gegenüber dem Eindringen von Baumaterial 4 bzw. entsprechenden Verschmutzungen zu realisieren, kann in diesem Bereich eine Einblaseinrichtung (nicht gezeigt) zum An- oder Einblasen von, insbesondere inertem, Gas angeordnet sein. Die Einblaseinrichtung umfasst wenigstens ein, insbesondere düsenartiges, Einblaseelement. Sofern die Einblaseinrichtung mehrere Einblaselemente umfasst, sind diese typischerweise ober- und unterhalb des oberen und unteren Randbereichs des Abschirmbands 20 angeordnet.

Analoges gilt für den Bereich, in dem ein einem freien Ende des linken äußeren Abschirmelements 22 zugewandtes freies Ende des rechten äußeren Abschirmelements 22 im Bereich eines diesem zugewandten rechten freien Endes des inneren Abschirmelements 23 angeordnet ist. Mithin kann auch in diesem Bereich eine wenigstens ein, insbesondere düsenartiges, Einblaseelement umfassende Einblaseinrichtung (nicht gezeigt) zum An- oder Einblasen von, insbesondere inertem, Gas angeordnet sein. Sofern die Einblaseinrichtung mehrere Einblaselemente umfasst, sind diese typischerweise ober- und unterhalb des oberen und unteren Randbereichs des Abschirmbands 20 angeordnet.

Zur Realisierung der beschriebenen Bewegungskopplung zwischen der Beschichterelementbaugruppe 8 und dem Abschirmband 20 weist das Abschirmband 20 eine Ausnehmung 25 auf, welche von der Beschichterelementbaugruppe 8, d. h. dem dieser zugehörigen Beschichterarm 11, quer zu ihrer Längserstreckung durchgriffen ist. Die Bewegungskopplung zwischen dem Abschirmband 20 und der Beschichterelementbaugruppe 8 ist insbesondere durch den Durchgriff der Beschichterelementbaugruppe 8 durch die Ausnehmung 25 in dem Abschirmband 20 gebildet. Die Ausnehmung 25 ist unter Berücksichtigung der Querschnittsgeometrie des Beschichterarms 11 bemessen, d. h. insbesondere passgenau im Hinblick auf die Querschnittsgeometrie des Beschichterarms 11 gewählt, sodass ein Durchtritt von Baumaterial 4 durch die Ausnehmung 25 nicht möglich ist. Gegebenenfalls können in diesem Bereich zusätzliche Dichtelemente (nicht gezeigt) vorgesehen werden.

Alternativ dazu ist es auch möglich, dass das Abschirmband 20 in einer nicht geschlossenen Ausführung zwei freie Enden aufweist, wobei ein erstes freies Ende über einen ersten Befestigungspunkt form- und/oder kraft- und/oder stoffschlüssig an dem Beschichterarm 11 befestigt ist und ein zweites freies Ende über einen zweiten Befestigungspunkt an dem Beschichterarm 11 befestigt ist. Die Bewegungskopplung zwischen dem Abschirmband 20 und der Beschichterelementbaugruppe 8 ist hier durch die Befestigung der freien Enden des Abschirmbands 20 an dem Beschichterarm 11 gebildet.

Die Führungseinrichtung 9, d. h. insbesondere die dieser zugehörigen Führungselemente 9a, 9b, kann bzw. können, insbesondere hängend, oberhalb der Arbeitsebene A angeordnet sein. Die Führungseinrichtung 9 kann hierfür z. B. an einer Prozesskammerbegrenzung (nicht gezeigt), insbesondere an einer die Prozesskammer 14 seitlich oder deckenseitig begrenzenden Prozesskammerwandung, angeordnet sein. Durch eine entsprechend in vertikaler Richtung zu der Arbeitsebene A beabstandete Anordnung der Führungseinrichtung 9 ist ein weiterer Schutz der Führungseinrichtung 9 vor Verschmutzungen gegeben.

Verschiedene Merkmale der Erfindung sind anhand der nachfolgenden Aspekte ersichtlich:
1. Vorrichtung (1) zur additiven Herstellung dreidimensionaler Objekte (3) durch sukzessives schichtweises selektives Belichten und damit einhergehendes sukzessives schichtweises selektives Verfestigen von Baumaterialschichten aus einem vermittels eines Energiestrahls verfestigbaren Baumaterial (4), gekennzeichnet durch
   eine Prozesskammer (14), welche eine Arbeitsebene (A) umfasst, welche einen ersten Arbeitsebenenbereich (A1), welcher eine Bauebene (E) umfasst, und einen weiteren Arbeitsebenenbereich (A2), in welchem wenigstens ein Teil einer Beschichtereinrichtung (6) angeordnet ist,
   eine Beschichtereinrichtung (6), welche zur Ausbildung selektiv zu belichtender und selektiv zu verfestigender Baumaterialschichten in der Bauebene (E) eingerichtet ist, und welche eine über eine Führungseinrichtung (9), insbesondere relativ zu der Bauebene (E), bewegbar gelagerte, wenigstens ein Beschichterelement umfassende Beschichterelementbaugruppe (8) umfasst, eine Abschirmeinrichtung (18), welche zur Abschirmung des zweiten Arbeitsebenenbereichs (A2) vor dem Eindringen von Baumaterial (4) und/oder von prozessbedingt entstehenden Verunreinigungen eingerichtet ist, wobei die Abschirmeinrichtung (18) wenigstens ein entlang von Lagerpunkten (19) bewegbar geführtes Abschirmband (20) umfasst, welches einen Innenraum (21) definiert, wobei die Beschichterelementbaugruppe (8) mit dem Abschirmband (20) bewegungsgekoppelt und die die Beschichterelementbaugruppe (8) führende Führungseinrichtung (9) innerhalb des Innenraums (21) angeordnet oder ausgebildet ist.
2. Vorrichtung nach Aspekt 1, wobei die Abschirmeinrichtung (18) wenigstens ein sich zumindest abschnittsweise entlang des Außenumfangs des Abschirmbands (20) erstreckendes äußeres Abschirmelement (22) umfasst, wobei das äußere Abschirmelement (22) diesen abschnittsweise kontaktierend an dem Außenumfang des Abschirmbands (20) anliegt, sodass sich bei einer Bewegung des Abschirmbands (20) relativ zu dem äußeren Abschirmelement (22) eine Abstreifwirkung des äußeren Abschirmelements (22) ergibt.
3. Vorrichtung nach Aspekt 2, wobei die Abschirmeinrichtung (18) wenigstens zwei äußere Abschirmelemente (22) in einander gegenüber liegenden Anordnung umfasst.
4. Vorrichtung nach Aspekt 3, wobei ein jeweiliges äußeres Abschirmelement (22) in einem Umlenkbereich, in welchem das Abschirmband (20) über einen Lagerpunkt (19) von einer ersten Erstreckungsrichtung in eine winklig dazu verlaufende zweite Erstreckungsrichtung umgelenkt wird, angeordnet oder ausgebildet sind.
5. Vorrichtung nach einem der Aspekte 2 bis 4, wobei ein äußeres Abschirmelement (22) wenigstens in dem den Außenumfang des Abschirmbands (20) kontaktierenden Bereich einen Abstreifabschnitt aus einem elastischen Material, insbesondere einem Elastomer-, Filz- oder Schaumstoffmaterial, umfasst.
6. Vorrichtung nach einem der Aspekte 2 bis 5, wobei ein äußeres Abschirmelement (22) kraftbeaufschlagt, insbesondere federkraftbeaufschlagt, gegen den Außenumfang des Abschirmbands (20) bewegt ist.
7. Vorrichtung nach einem der vorhergehenden Aspekte, wobei die Abschirmeinrichtung (18) wenigstens ein sich zumindest abschnittsweise entlang des Innenumfangs des Abschirmbands (20) erstreckendes inneres Abschirmelement (23) umfasst, wobei das innere Abschirmelement (23) diesen abschnittsweise kontaktierend an dem Innenumfang des Abschirmbands (20) anliegt, sodass sich bei einer Bewegung des Abschirmbands(20) relativ zu dem inneren Abschirmelement (23) eine Abstreifwirkung des Abschirmelements (23) ergibt.
8. Vorrichtung nach Aspekt 7, wobei sich ein inneres Abstreifelement (23) zwischen zwei Lagerpunkten (19), entlang welcher sich das Abschirmband (20) erstreckt, entlang des Innenumfangs des Abschirmbands (20) erstreckt.
9. Vorrichtung nach Aspekt 7 oder 8, wobei ein inneres Abschirmelement (23) als ein mehrere Abstreifborsten umfassendes Bürstenelement ausgebildet ist oder wenigstens ein solches umfasst.
10. Vorrichtung nach Aspekt 3 oder 4 und einem der Aspekte 7 bis 9, wobei ein einem freien Ende eines zweiten äußeren Abschirmelements (22) zugewandtes freies Ende eines ersten äußeren Abschirmelements (22) im Bereich eines diesem zugewandten ersten freien Endes des inneren Abschirmelements (23) angeordnet ist und ein einem freien Ende des ersten äußeren Abschirmelements (22) zugewandtes freies Ende des zweiten äußeren Abschirmelements (22) im Bereich eines diesem zugewandten zweiten freien Endes des inneren Abschirmelements (23) angeordnet ist.
11. Vorrichtung nach Aspekt 10, wobei in dem Bereich, in dem ein einem freien Ende eines zweiten äußeren Abschirmelements (22) zugewandtes freies Ende eines ersten äußeren Abschirmelements (22) im Bereich eines diesem zugewandten ersten freien Endes des inneren Abschirmelements (23) angeordnet ist, eine wenigstens ein, insbesondere düsenartiges, Einblaseelement umfassende Einblaseinrichtung zum An- oder Einblasen von, insbesondere inertem, Gas angeordnet oder ausgebildet ist, und/oder
   in dem Bereich, in dem ein einem freien Ende des ersten äußeren Abschirmelements (22) zugewandtes freies Ende des zweiten äußeren Abschirmelements (22) im Bereich eines diesem zugewandten zweiten freien Endes des inneren Abschirmelements (23) angeordnet ist, eine wenigstens ein, insbesondere düsenartiges, Einblaseelement umfassende Einblaseinrichtung zum An- oder Einblasen von, insbesondere inertem, Gas angeordnet oder ausgebildet ist.
12. Vorrichtung nach einem der vorhergehenden Aspekte, wobei das Abschirmband (20) wenigstens eine Ausnehmung (25) aufweist, welche die Beschichterelementbaugruppe (8), insbesondere ein dieser zugehöriger Beschichterarm (11), quer zu ihrer Längserstreckung durchgreift, wobei die Bewegungskopplung zwischen dem Abschirmband (20) und der Beschichterelementbaugruppe (8) durch den Durchgriff der Beschichterelementbaugruppe (8) durch die Ausnehmung (25) in dem Abschirmband (20) gebildet ist.
13. Vorrichtung nach einem der Aspekte 1 bis 11, wobei das Abschirmband (20) zwei freie Enden aufweist, wobei ein erstes freies Ende über einen ersten Befestigungspunkt an der Beschichterelementbaugruppe (8), insbesondere an einem dieser zugehörigen Beschichterarm (11), befestigt ist und ein zweites freies Ende über einen zweiten Befestigungspunkt an der Beschichterelementbaugruppe (8), insbesondere an dem dieser zugehörigen Beschichterarm (11), befestigt ist, wobei die Bewegungskopplung zwischen dem Abschirmband (20) und der Beschichterelementbaugruppe (8) durch die Befestigung der freien Enden des Abschirmbands (20) an der Beschichterelementbaugruppe (8), insbesondere dem dieser zugehörigen Beschichterarm, gebildet ist.
14. Vorrichtung nach einem der vorhergehenden Aspekte, wobei die Führungseinrichtung (9) ein oder mehrere, insbesondere schienenartige, Führungselemente (9a, 9b) umfasst, welche zu einer, insbesondere linear, bewegbar gelagerten Führung der Beschichterelementbaugruppe (8) entlang einer durch die Führungselemente (9a, 9b) definierten Bewegungsachse eingerichtet sind.
15. Vorrichtung nach einem der vorhergehenden Aspekte, wobei die Führungseinrichtung (9), insbesondere hängend, oberhalb der Arbeitsebene (A) angeordnet oder ausgebildet ist.
16. Vorrichtung nach einem der vorhergehenden Aspekte, wobei die Beschichterelementbaugruppe (8) ein erstes Beschichterelement in Form eines mit der Führungseinrichtung (9) bewegungsgekoppelten Beschichterarms (11) und ein weiteres Beschichterelement in Form eines an dem Beschichterarm (11) angeordneten eine Beschichterklinge bildenden Beschichterklingenelements (10) umfasst.

## Patentansprüche

1. Vorrichtung (1) zur additiven Herstellung dreidimensionaler Objekte (3), wobei die Vorrichtung (1) umfasst:
eine Prozesskammer (14), eine Beschichtereinrichtung (6), eine Abschirmeinrichtung (18) und eine Führungseinrichtung (9), wobei
die Prozesskammer (14) einen ersten Arbeitsebenenbereich (A1) und einen zweiten Arbeitsebenenbereich (A2) umfasst, wobei der erste Arbeitsebenenbereich (A1) eine Bauebene (E) umfasst, und der zweite Arbeitsebenenbereich (A2) wenigstens einen Teil der Führungseinrichtung (9) aufnimmt; wobei
die Beschichtereinrichtung (6) umfasst:
eine Beschichterelementbaugruppe (8), welche vermittels der Führungseinrichtung (9) relativ zu der Bauebene (E) bewegbar gelagert ist, und
wenigstens ein Beschichterelement zur Ausbildung von Baumaterialschichten in der Bauebene (3); wobei
die Abschirmeinrichtung (18) eingerichtet ist, den zweiten Arbeitsebenenbereich (A2) vor dem Eindringen von Baumaterial oder von prozessbedingt entstehenden Verunreinigungen von dem ersten Arbeitsebenenbereich (A1) abzuschirmen; wobei
die Abschirmeinrichtung (18) ein Abschirmband (20) umfasst, wobei das Abschirmband (20) mit der Beschichterelementbaugruppe (8) bewegungsgekoppelt ist; und wobei
das Abschirmband (20) eingerichtet ist, entlang von Lagerpunkten (19), welche einen Innenraum des zweiten Arbeitsebenenbereichs (A2) definieren, bewegbar geführt zu sein, wobei die Führungseinrichtung (9) oberhalb des ersten Arbeitsebenenbereichs (A1) angeordnet oder ausgebildet ist.

2. Vorrichtung nach Anspruch 1, wobei die Führungseinrichtung (9) ein oder mehrere schienenartige Führungselemente (9a, 9b) umfasst, wobei das eine oder die mehreren schienenartigen Führungselemente (9a, 9b) eingerichtet sind eine bewegbar gelagerte Führung der Beschichterelementbaugruppe (8) entlang einer Bewegungsachse, welche durch das eine oder die mehreren schienenartigen Führungselemente (9a, 9b) definiert ist, auszubilden.

3. Vorrichtung nach Anspruch 1 oder 2, wobei die Führungseinrichtung (9) oberhalb des ersten Arbeitsebenenbereichs (A1) gelagert ist.

4. Vorrichtung nach einem der vorhergehenden Ansprüche, wobei die Führungseinrichtung (9) an einer Prozesskammerwandung angeordnet oder ausgebildet ist, wobei die Prozesskammerwandung zumindest abschnittsweise eine Seite der Prozesskammer und/oder zumindest abschnittsweise eine Decke der Prozesskammer definiert.

5. Vorrichtung nach einem der vorhergehenden Ansprüche, wobei die Führungseinrichtung (9) innerhalb des Innenraums des zweiten Arbeitsebenenbereichs (A2) angeordnet oder ausgebildet ist.

6. Vorrichtung nach einem der vorhergehenden Ansprüche, wobei die Beschichterelementbaugruppe (8) einen Beschichterarm (11) und ein Beschichterklingenelement (10) umfasst, wobei der Beschichterarm (11) mit der Führungseinrichtung (9) bewegungsgekoppelt ist und das Beschichterklingenelement (10) an dem Beschichterarm (11) angeordnet ist.

7. Vorrichtung nach einem der vorhergehenden Ansprüche, wobei das Abschirmband eine Ausnehmung aufweist, durch welche sich der Beschichterarm (11) der Beschichterelementbaugruppe (8) erstreckt, und wobei die Erstreckung des Beschichterarms (11) durch die Ausnehmung des Abschirmbands zur Ausbildung der Bewegungskopplung mit der Beschichterelementbaugruppe (8) dient.

8. Vorrichtung nach einem der vorhergehenden Ansprüche, wobei die Abschirmeinrichtung ein oder mehrere äußere Abschirmelemente, welche sich wenigstens bereichsweise entlang eines Außenumfangs des Abschirmbands erstrecken, umfasst, wobei das eine oder die mehreren äußeren Abschirmelemente an den Außenumfang des Abschirmbands angrenzen oder diesen kontaktieren, und wobei eine Bewegung des Abschirmbands relativ zu dem einen oder den mehreren äußeren Abschirmelementen eine Abstreifwirkung des einen oder der mehreren äußeren Abschirmelemente bewirkt.

9. Vorrichtung nach Anspruch 8, wobei das eine oder die mehreren äußeren Abschirmelemente einen Abstreifabschnitt, welcher wenigstens in einem Bereich den Außenumfang des Abschirmbands kontaktiert, umfassen, wobei der Abstreifabschnitt ein elastisches Material, insbesondere ein Elastomer-, Filz- oder Schaumstoffmaterial, umfasst.

10. Vorrichtung nach Anspruch 8 oder 9, wobei das eine oder die mehreren äußeren Abschirmelemente ein erstes äußeres Abschirmelement umfasst, welches an einem ersten Ende der Abschirmeinrichtung (18) angeordnet ist und ein zweites äußeres Abschirmelement umfasst, welches an einem zweiten Ende der Abschirmeinrichtung (18) angeordnet ist.

11. Vorrichtung nach einem der Ansprüche 8 bis 10, wobei das erste äußere Abschirmelement und das zweite äußere Abschirmelement parallel bezüglich einer Längserstreckung des Abschirmbands angeordnet sind.

12. Vorrichtung nach einem der Ansprüche 8 bis 11, wobei die Abschirmeinrichtung ein oder mehrere innere Abschirmelemente, welche sich wenigstens bereichsweise entlang eines Innenumfangs des Abschirmbands erstrecken umfasst, wobei das eine oder die mehreren inneren Abschirmelemente an den Innenumfang des Abschirmbands angrenzen oder diesen kontaktieren, und wobei eine Bewegung des Abschirmbands relativ zu dem einen oder den mehreren inneren Abschirmelementen eine Abstreifwirkung des einen oder der mehreren inneren Abschirmelemente bewirkt.

13. Vorrichtung nach Anspruch 12, wobei das eine oder die mehreren inneren Abschirmelemente ein inneres Abschirmelement umfassen, welches sich entlang des Innenumfangs des Abschirmbands zwischen zwei der Lagerpunkte, entlang welcher sich das Abschirmband erstreckt, erstreckt.

14. Vorrichtung nach Anspruch 12 oder 13, ferner umfassend:
ein erstes Einblaselement, welches wenigstens ein düsenartiges Einblaselement, welches zum Einblasen oder Einbringen eines Gases in einen Bereich des ersten äußeren Abschirmelements und/oder in einen Bereich des einen oder der mehreren inneren Abschirmelemente eingerichtet ist, umfasst; und/oder
ein zweites Einblaselement, welches wenigstens ein düsenartiges Einblaselement, welches zum Einblasen oder Einbringen eines Gases in einen Bereich des zweiten äußeren Abschirmelements und/oder in einen Bereich des einen oder der mehreren inneren Abschirmelemente eingerichtet ist, umfasst.

15. Vorrichtung nach einem der vorhergehenden Ansprüche, wobei die Vorrichtung (1) eingerichtet ist, selektives Laserschmelzen auszuführen.
